(19) Europäisches Patentamt / European Patent Office / Office européen des brevets

(11) **EP 4 741 726 A1**

(12) **EUROPEAN PATENT APPLICATION**
published in accordance with Art. 153(4) EPC

(43) Date of publication:
**13.05.2026 Bulletin 2026/20**

(21) Application number: **24862615.2**

(22) Date of filing: **23.08.2024**

(51) International Patent Classification (IPC):
**F24F 11/64** (2018.01)    **G05B 13/02** (2006.01)
**F24F 110/10** (2018.01)

(52) Cooperative Patent Classification (CPC):
**G05B 13/02; F24F 2110/10; F24F 2110/64**

(86) International application number:
**PCT/JP2024/030035**

(87) International publication number:
**WO 2025/052962 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.09.2023 JP 2023142859**

(71) Applicant: **MITSUBISHI HEAVY INDUSTRIES THERMAL SYSTEMS, LTD.**
**Tokyo 100-8332 (JP)**

(72) Inventors:
• **NISHIKAWA, Naoki**
  **Tokyo 100-8332 (JP)**
• **MORIKAWA, Junji**
  **Tokyo 100-8332 (JP)**
• **ARAI, Kenta**
  **Tokyo 100-8332 (JP)**

(74) Representative: **Cabinet Beau de Loménie**
**103, rue de Grenelle / CS 90800**
**75340 Paris Cedex 07 (FR)**

Remarks:
A request for correction of the description has been filed pursuant to Rule 139 EPC. A decision on the request will be taken during the proceedings before the examining division (Guidelines for Examination in the EPO, A-V, 3).

(54) **CONTROL DEVICE, CONTROL METHOD, AND PROGRAM**

(57) This control device comprises: an extraction unit that extracts, from time-series data obtained by measuring the indoor temperature of an air-conditioned space, an element included in a monitoring section stretching from a prescribed start condition for air-conditioning control by an air conditioner to an end condition therefor; an estimation unit that estimates, on the basis of the time-series data of the monitoring section, a time constant estimation value and a dead time estimation value of a primary delay response of the air-conditioning control; and a learning unit that learns a lookup table in which an explanatory variable, which is a condition affecting the air conditioning of the air-conditioned space, is associated with the dead time estimation value and the time constant estimation value.

FIG. 1

EP 4 741 726 A1

**Description**

Technical Field

The present disclosure relates to a control device, a control method, and a program.

Priority is claimed on Japanese Patent Application No. 2023-142859, filed on September 4, 2023, the content of which is incorporated herein by reference.

Background Art

For example, in a case where an air conditioner performs a cooling operation, it takes time for an indoor temperature to reach a target temperature set by a user after the power is turned on, and the indoor temperature during this period is not comfortable for an occupant (user). Therefore, in order to make the room comfortable when the user occupies the room, the user uses a function (warming-up operation) of manually turning on the power of the air conditioner (indoor unit) before the time when the user is expected to start occupying the room and automatically starts precooling a certain period of time in advance (for example, 15 minutes or 30 minutes before).

An appropriate precooling time varies not only depending on an air-conditioned space such as a room but also depending on conditions such as an outside air temperature. Therefore, in a case where the time when the precooling is automatically started is fixed as in the warming-up operation described above, the precooling time may be excessive or insufficient. In a case where the precooling time of the air conditioner is excessive, energy is wasted, which leads to an increase in electricity bills. In a case where the precooling time is insufficient, the comfort is impaired.

In addition, it is considered that the air conditioner performs control in response to a change in conditions such as the outside air temperature by taking into consideration thermal response parameters including a dead time between an operation and the appearance of results, as well as a first-order delay (for example, see PTL 1 and PTL 2).

Citation List

Patent Literature

[PTL 1] Japanese Unexamined Patent Application Publication No. 2001-350503
[PTL 2] Japanese Unexamined Patent Application Publication No. 2002-054837

Summary of Invention

Technical Problem

In order to calculate the thermal response parameters in real time in response to constantly changing conditions and to calculate the precooling time, sufficient computational resources (memory and CPU) are required. However, in most cases, a control device (microcomputer) of a general air conditioner is equipped with only limited computational resources.

An object of the present disclosure is to provide a control device, a control method, and a program capable of learning a lookup table that can predict thermal response parameters to a set temperature with low load and at high speed even when only limited computational resources are installed.

Solution to Problem

One aspect of the present disclosure relates to a control device including: an extraction unit that extracts an element included in a monitoring interval from a predetermined start condition to a predetermined end condition of air conditioning control by an air conditioner from time-series data obtained by measuring an indoor temperature of an air-conditioning target space; an estimation unit that estimates a time constant estimation value and a dead time estimation value of a first-order delay response of the air conditioning control based on the time-series data of the monitoring interval; and a learning unit that learns a lookup table in which an explanatory variable that is a condition affecting air conditioning of the air-conditioning target space is associated with the dead time estimation value and the time constant estimation value.

Another aspect of the present disclosure relates to a control method including: a step of extracting an element included in a monitoring interval from a predetermined start condition to a predetermined end condition of air conditioning control by an air conditioner from time-series data obtained by measuring an indoor temperature of an air-conditioning target space; a step of estimating a time constant estimation value and a dead time estimation value of a first-order delay response of the air conditioning control based on the time-series data of the monitoring interval; and a step of learning a lookup table in which an explanatory variable that is a condition affecting air conditioning of the air-conditioning target space is associated with the dead time estimation value and the time constant estimation value.

Still another aspect of the present disclosure relates to a program causing a control device to execute a process including: a step of extracting an element included in a monitoring interval from a predetermined start condition to a predetermined end condition of air conditioning control by an air conditioner from time-series data obtained by measuring an indoor temperature of an air-conditioning target space; a step of estimating a time constant estimation value and a dead time estimation value of a first-order delay response of the air conditioning control based on the time-series data of the monitoring interval; and a step of learning a lookup table in which an explanatory variable that is a condition affecting air conditioning of the air-conditioning target space is associated with the dead time estimation value and the time constant estimation value. Advantageous Effects of Invention

According to the above aspects, even when only limited computational resources are installed, it is possible to learn the lookup table that can predict the thermal response parameters for the set temperature with low load and at high speed.

Brief Description of Drawings

FIG. 1 is a diagram showing a functional configuration of an air conditioning system according to a first embodiment.
FIG. 2 is a diagram showing an example of a prediction model (lookup table) according to the first embodiment.
FIG. 3 is a diagram showing an example of assignment of explanatory variables and level categories according to the first embodiment.
FIG. 4 is a flowchart showing an example of a process of estimating thermal response parameters according to the first embodiment.
FIG. 5 is a flowchart showing an example of a learning process of the prediction model according to the first embodiment.
FIG. 6 is a block diagram showing an example of a process of updating the lookup table according to the first embodiment.
FIG. 7 is a flowchart showing an example of a prediction process of a predicted arrival time according to the first embodiment.
FIG. 8 is a block diagram showing an example of the prediction process of the predicted arrival time according to the first embodiment.

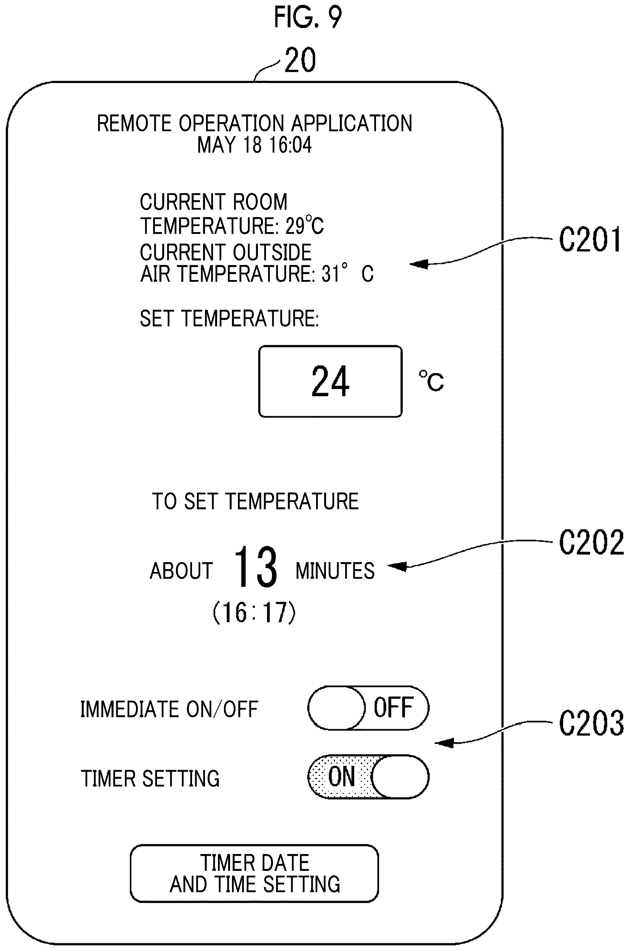

FIG. 9 is a diagram showing a display example of a terminal device according to the first embodiment.
FIG. 10 is a diagram showing an example of the process of updating the lookup table according to the first embodiment.

Description of Embodiments

<First Embodiment>

Hereinafter, a control method according to a first embodiment will be described with reference to the accompanying drawings. Although the control method according to the present embodiment can be applied to control of various heat source devices such as an air conditioner, a water heater, and a chiller, hereinafter, an example will be described in which the control method according to the present embodiment is applied to the air conditioner.

(Overall Configuration of Air Conditioning System)

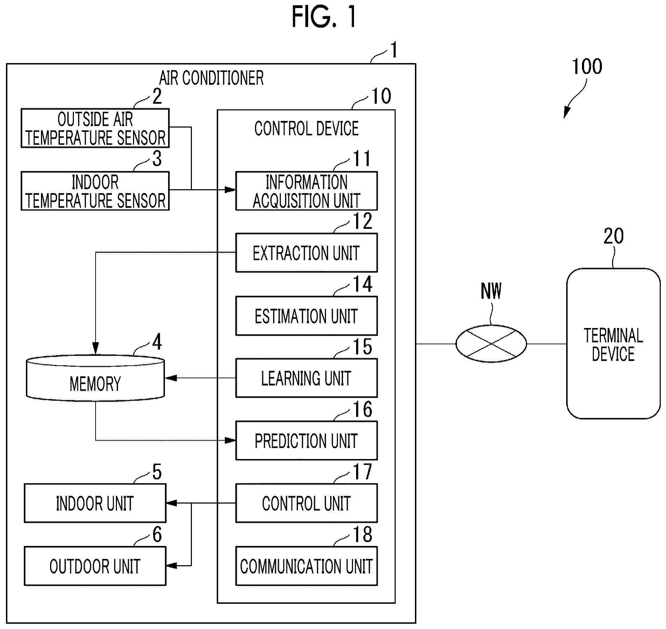

FIG. 1 is a diagram showing a functional configuration of an air conditioning system according to the first embodiment.
As shown in FIG. 1, an air conditioning system 100 includes an air conditioner 1 and a terminal device 20. The air conditioner 1 includes an outside air temperature sensor 2, an indoor temperature sensor 3, a memory 4, an indoor unit 5, and an outdoor unit 6. The outside air temperature sensor 2 and the indoor temperature sensor 3 are connected to a control device 10, and the control device 10 acquires temperatures measured by the outside air temperature sensor 2 and the indoor temperature sensor 3. The indoor unit 5 and the outdoor unit 6 are connected to the control device 10, and the control device 10 controls the indoor unit 5 and the outdoor unit 6 and detects operation states of the indoor unit 5 and the outdoor unit 6. The control device 10 and the terminal device 20 are connected so as to be able to communicate with each other via a network NW. The terminal device 20 is, for example, a smartphone or a tablet on which an application capable of remotely operating the air conditioner 1 is installed.

(Functional Configuration of Control Device)

The control device 10 is, for example, a computer including a central processing unit (CPU), such as a microcomputer or a micro processing unit (MPU). The control device 10 includes an information acquisition unit 11, an extraction unit 12, an estimation unit 14, a learning unit 15, a prediction unit 16, a control unit 17, and a communication unit 18.

The information acquisition unit 11 acquires an outside air temperature measured by the outside air temperature sensor 2, and an indoor temperature measured by the indoor temperature sensor 3.

The extraction unit 12 extracts an element included in a monitoring interval from a predetermined start condition to a predetermined end condition of air conditioning control by the air conditioner 1 from time-series data obtained by measuring the indoor temperature of an indoor space (air-conditioning target space) in which the air conditioner 1 is provided.

The estimation unit 14 estimates a time constant estimation value $\tau$ and a dead time estimation value L of a first-order delay response of the air conditioning control based on the time-series data of the monitoring interval.

The learning unit 15 trains a prediction model (lookup table) in which an explanatory variable that is a condition affecting the air conditioning of the air-conditioning target space is associated with the dead time estimation value L and the time constant estimation value $\tau$. The learned lookup table is stored in the memory 4.

The prediction unit 16 predicts a predicted arrival time D for the air-conditioning target space to reach a target temperature based on the trained prediction model (lookup table) read from the memory 4 and a current explanatory variable.

The control unit 17 controls the indoor unit 5 and the outdoor unit 6. The control unit 17 operates the indoor unit 5 and the outdoor unit 6 such that the air-conditioning target space approaches the set temperature at the set time based on the set temperature and the set time set by the terminal device 20 through the communication unit 18 and the predicted arrival time D predicted by the prediction unit 16. For example, the control unit 17 starts the air conditioning at a time that is the predicted arrival time D before the set time or a little before the time, and performs the cooling operation or the heating operation such that the set temperature can be achieved by the set time.

The communication unit 18 communicates with the terminal device 20. For example, the communication unit 18 transmits the predicted arrival time D predicted by the prediction unit 16 to the terminal device 20. In addition, the communication unit 18 may receive set conditions such as the set temperature and the set time or an operation instruction such as power-on of the air conditioner 1 from the terminal device 20.

(Prediction Model)

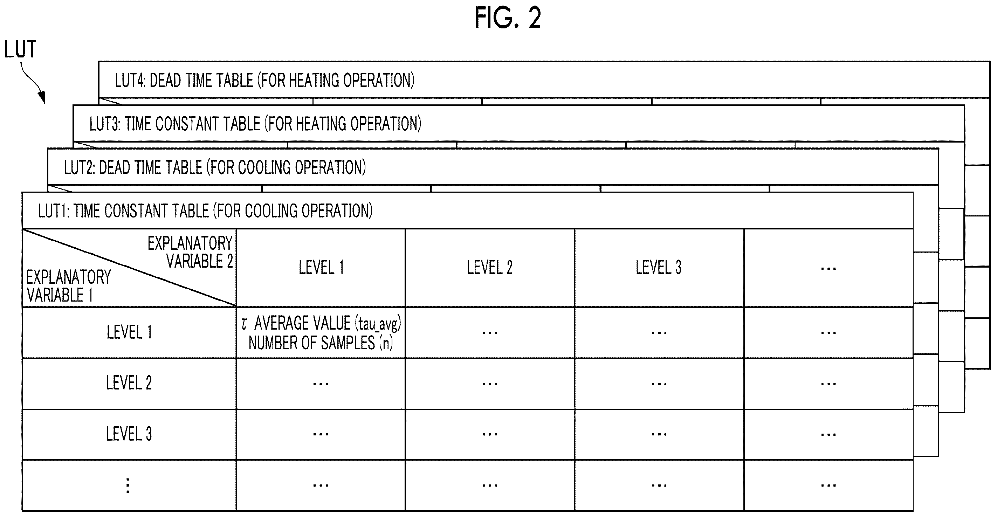

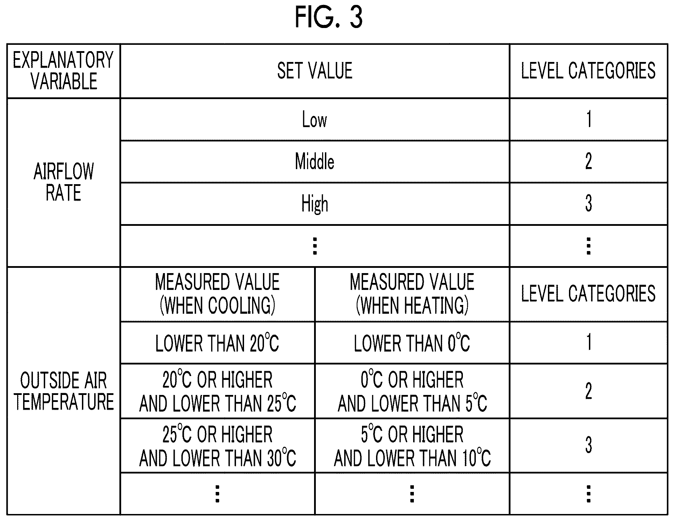

FIG. 2 is a diagram showing an example of the prediction model (lookup table) according to the first embodiment. FIG. 3 is a diagram showing an example of assignment of the explanatory variables and level categories according to the first embodiment.

As shown in FIG. 2, in the present embodiment, the prediction model of the thermal response parameters is represented by a lookup table LUT of the time constant estimation value $\tau$ and the dead time estimation value L for each operation mode. In addition, in the example of FIG. 2, the table of the time constant estimation value $\tau$ and the table of the dead time estimation value L each include a table for each operation mode (heating operation and cooling operation). Therefore, the lookup table LUT according to the present embodiment includes four tables of a time constant table LUT1 for the cooling operation, a dead time table LUT2 for the cooling operation, a time constant table LUT3 for the heating operation, and a dead time table LUT4 for the heating operation. In the example of FIG. 2, the table using two explanatory variables is shown, but the present disclosure is not limited to this. In another embodiment, the number of explanatory variables may be only one, or three or more. Further, each explanatory variable has a plurality of level categories. The level category of the explanatory variable is used as an index for identifying a cell of each table.

For example, as shown in FIG. 3, it is assumed that an explanatory variable 1 is an airflow rate and an explanatory variable 2 is an outside air temperature. The airflow rate is assigned a level category for each airflow rate set value of a fan of the indoor unit 5. In addition, the outside air temperature is assigned a level category for each range of the measured value of the outside air temperature sensor 2. The level category of the outside air temperature may be set to different temperature ranges in the cooling operation and the heating operation as in the example of FIG. 3.

That is, in the examples of FIGS. 2 and 3, each table records an estimation value of the thermal response parameters (time constant $\tau$ or dead time L) corresponding to a combination of the airflow rate and the outside air temperature in each cell for each operation mode (heating operation or cooling operation). With this configuration, the thermal response parameters that are different depending on the setting of the air conditioner 1, the environmental conditions, or the like can be updated and referred to. In addition, the number of samples n (the number of times the thermal response parameters are recorded) is recorded in each cell. A process of updating the lookup table (learning process) and a process of referring to the lookup table (prediction process) will be described later.

(Process of Estimating Thermal Response Parameters)

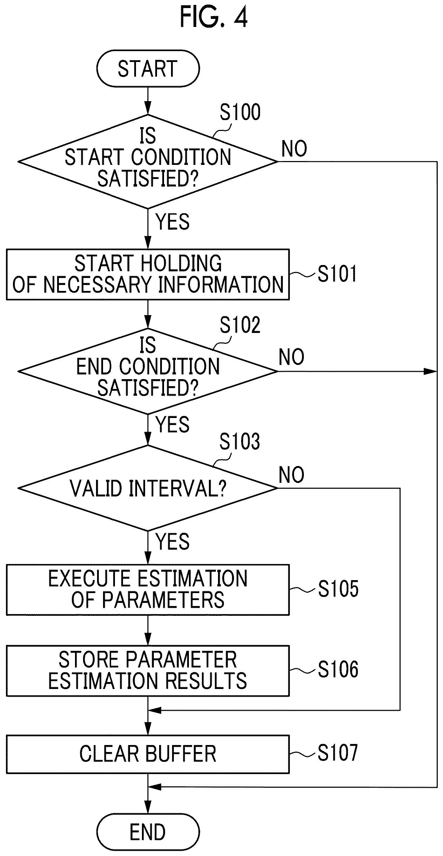

FIG. 4 is a flowchart showing an example of a process of estimating the thermal response parameters according to the first embodiment.

Here, a flow of the process of estimating the thermal response parameters by the control device 10 will be described with reference to FIG. 4. The control device 10 repeatedly executes the series of processes shown in FIG. 2 for each predetermined control cycle (for example, every 50 ms) while the air conditioner 1 is operating. In addition, during this period, the information acquisition unit 11 sequentially acquires the sensor measured value or the set value of the outside air temperature, the indoor temperature, the airflow rate, or the like from the outside air temperature sensor 2, the indoor temperature sensor 3, the indoor unit 5, or the like.

First, the extraction unit 12 determines whether or not the start condition of the monitoring interval is satisfied (step S100). The monitoring interval is an interval for monitoring (extracting and holding) data in order to estimate the thermal response parameters in the air conditioning control of the air conditioner 1. For example, the extraction unit 12 determines that the start condition of the monitoring interval is satisfied when the indoor unit 5 is switched to ON or when the set temperature is changed.

When the start condition is not satisfied (step S100; NO), the extraction unit 12 ends the process. On the other hand, when the start condition is satisfied (step S100; YES), the extraction unit 12 starts extracting and holding necessary information (step S101). Thereafter, the extraction unit 12 records the measured value (time-series data) of the indoor temperature in a buffer secured in the memory 4 for each predetermined control cycle. In addition, the extraction unit 12 records the operation mode (heating operation or cooling operation) of the air conditioner and the explanatory variable used in the learning process described later in the memory 4 only when the recording of the indoor temperature is started. The explanatory variable is, for example, a time when the holding of the measured value is started, the outside air temperature, the airflow rate of the indoor unit 5, and a temperature gap between the indoor temperature and the set temperature.

Next, the extraction unit 12 determines whether or not the predetermined end condition is satisfied (step S102). For example, the extraction unit 12 determines that the end condition is satisfied when the buffer reaches an end (upper limit number or upper limit amount of time-series data), when the indoor unit 5 is switched to OFF, or when the set temperature is changed.

When the end condition is not satisfied (step S102; NO), the extraction unit 12 temporarily ends the process. In this case, the holding of the time-series data of the indoor temperature is continuously performed. Accordingly, the indoor temperature in each step of the control cycle is extracted and held in the buffer until the extraction unit 12 determines that the end condition is satisfied. On the other hand, when the end condition is satisfied (step S102; YES), the extraction unit 12 further determines whether or not the monitoring interval is a valid interval (step S103).

For example, the extraction unit 12 determines that the monitoring interval is not valid (step S103; NO) when the time-series data does not satisfy a predetermined criterion (that is, it is difficult to estimate the thermal response parameters based on the time-series data), such as when the length of the data (time-series data of the indoor temperature) recorded in the buffer is less than a threshold value or when the indoor temperature does not reach the set temperature until the buffer end is achieved. In this case, the extraction unit 12 clears the buffer (step S106), and ends the process. On the other hand, when the time-series data satisfies the criterion, the extraction unit 12 determines that the monitoring interval is valid (step S103; YES).

Next, the estimation unit 14 estimates the thermal response parameters (step S105). The estimation unit 14 according to the present embodiment estimates the length of the dead time and the time constant of the first-order delay response as the thermal response parameters. A known technique may be used as a method of estimating the dead time estimation value $L$ and the time constant estimation value $\tau$ of the first-order delay response.

The estimation unit 14 stores the thermal response parameters including the dead time estimation value $L$ and the time constant estimation value $\tau$ in the memory 4 in association with the operation mode and the explanatory variable that are recorded earlier (step S106). Thereafter, the estimation unit 14 clears the buffer (step S107), and ends the process.

(Learning Process of Prediction Model)

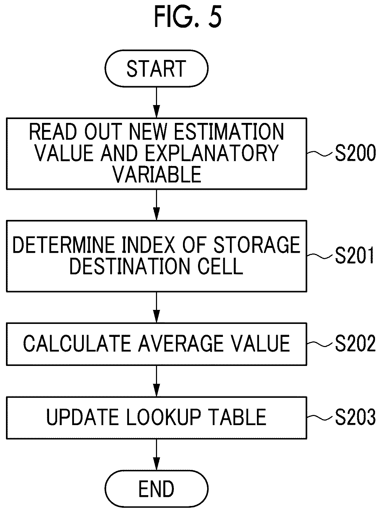

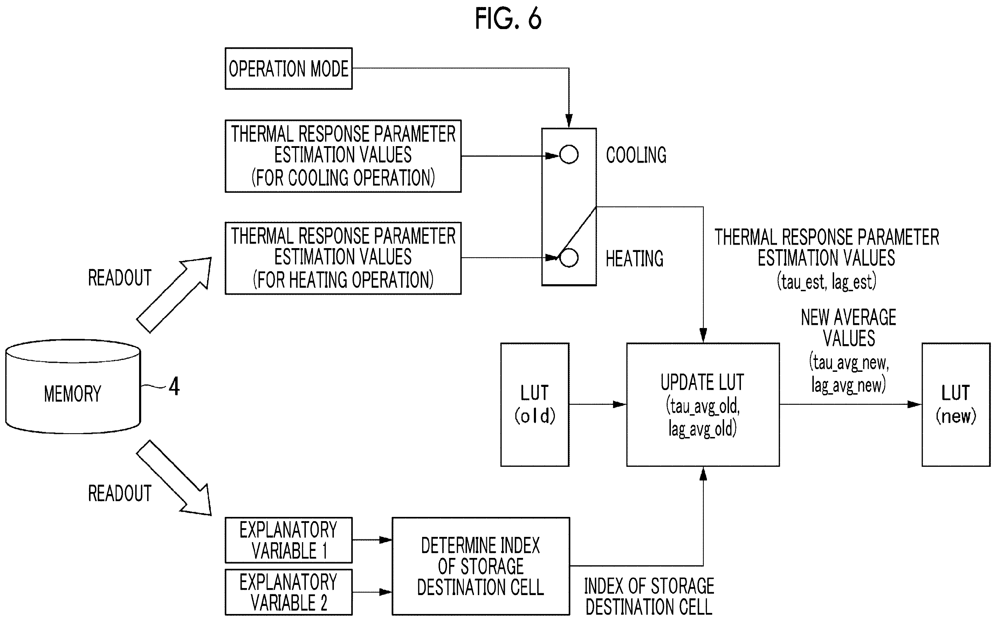

FIG. 5 is a flowchart showing an example of the learning process of the prediction model according to the first embodiment. FIG. 6 is a block diagram showing an example of a process of updating the lookup table according to the first embodiment.

Here, a flow of the learning process of the prediction model by the control device 10 will be described with reference to FIGS. 5 and 6. The control device 10 executes the series of processes shown in FIG. 5 each time the estimation unit 14 estimates the thermal response parameters.

First, the learning unit 15 reads out the estimation values of the thermal response parameters that are newly estimated by the estimation unit 14 and the explanatory variables recorded together with the estimation values from the memory 4 (step S200).

Next, the learning unit 15 determines an index of a storage destination cell of the estimation values of the thermal response parameters that are newly estimated (step S201).

First, the learning unit 15 stores the table in any of the table for the heating operation and the table for the cooling operation based on the operation mode read out from the memory 4. Further, the learning unit 15 determines the index of the storage destination cell based on the values of the explanatory variables read out from the memory 4. For example, it is assumed that the operation mode is the heating operation, the explanatory variable 1 (airflow rate) is Middle, and the explanatory variable 2 (outside air temperature) is 6°C. According to the examples of FIGS. 2 and 3, the explanatory variable 1 corresponds to the level 2, and the explanatory variable 2 corresponds to the level 3. Therefore, in this case, the learning unit 15 determines cells at which a row of the level 2 of the explanatory variable 1 and a column of the level 3 of the explanatory variable 2 intersect in the time constant table LUT3 for the heating operation and the dead time table LUT4 for the heating operation shown in FIG. 2 as the storage destination cell of each of the time constant estimation value $\tau$ (tau_est) and the dead time estimation value L (lag_est).

Then, the learning unit 15 calculates an average value of the new estimation value and the past estimation value (step S202). The learning unit 15 first reads out a value recorded in the storage destination cell of each table as a past average value (tau_avg_old, lag_avg_old).

Further, the learning unit 15 calculates an average value (tau_avg_new) of the new time constant estimation value (tau_est) and the average value (tau_avg_old) of the past time constant estimation value read out from the storage destination cell. Similarly, the learning unit 15 calculates an average value (lag_avg_new) of the new dead time estimation value (lag_est) and the average value (lag_avg_old) of the past dead time estimation value read out from the storage destination cell. In this case, the learning unit 15 may calculate the new average value by performing a weighted average with a weight $\alpha$ as in the following expressions (1) and (2). The weight $\alpha$ may be set to any value in a range of "$0 < \alpha \leq 1$". For example, by setting the weight $\alpha$ to be greater than 0.5, the influence of the new estimation value can be significantly reflected, and the effect of forgetting the past estimation value can be obtained. As a result, in a case where the thermal response parameters gradually change due to aging deterioration or the like, the estimation values of the thermal response parameters can follow the actual value.

$$\text{tau\_avg\_new} = \alpha * \text{tau\_est} + (1 - \alpha) * \text{tau\_avg\_old} \dots (1)$$

$$\text{lag\_avg\_new} = \alpha * \text{lag\_est} + (1 - \alpha) * \text{lag\_avg\_old} \dots (2)$$

The learning unit 15 updates the lookup table LUT by inputting the calculated new average value (tau_avg_new, lag_avg_new) to the storage destination cell of each table (step S203). In this case, the learning unit 15 adds 1 to the number of samples n of this storage destination cell.

When the number of samples n of the storage destination cell is 0, that is, when the thermal response parameters are input to the storage destination cell for the first time, the learning unit 15 does not calculate the average value, but directly inputs the thermal response parameter estimation values (tau_est, lag_est) read out from the memory 4 to the storage destination cell to update the lookup table LUT (step S202).

(Prediction Process of Predicted Arrival Time)

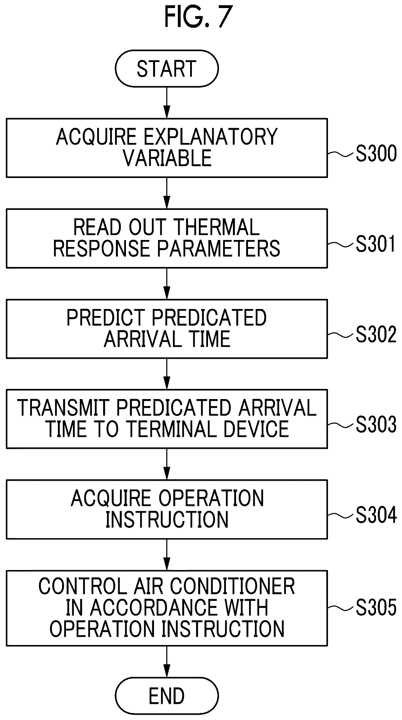

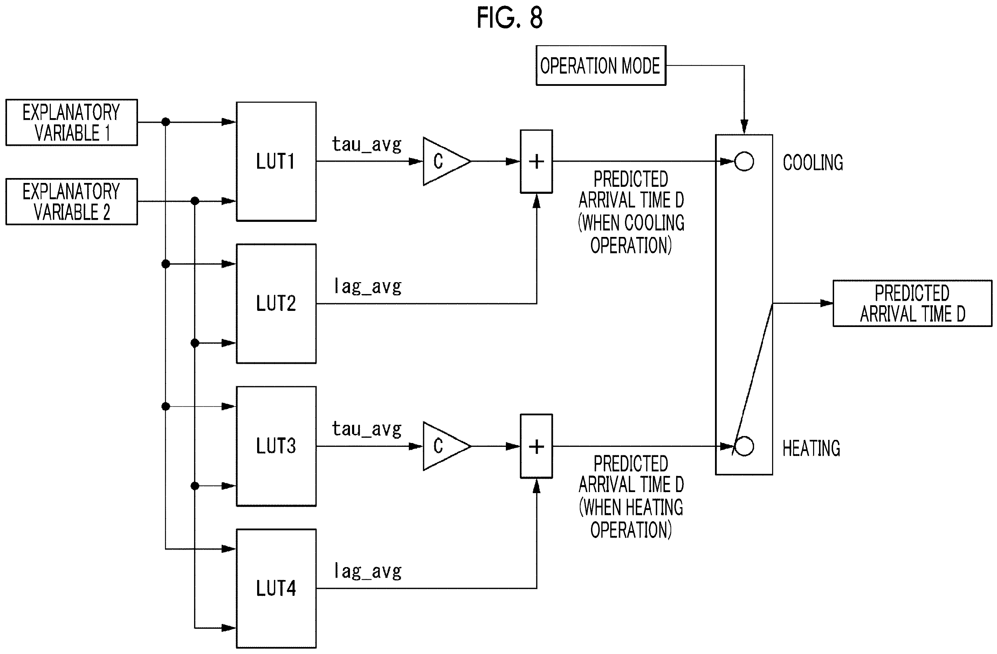

FIG. 7 is a flowchart showing an example of a prediction process of the predicted arrival time according to the first embodiment. FIG. 8 is a block diagram showing an example of the prediction process of the predicted arrival time according to the first embodiment.

Here, a flow of the prediction process of the predicted arrival time for the indoor temperature to reach the set temperature will be described with reference to FIGS. 7 and 8. The control device 10 executes the series of processes shown in FIG. 7, for example, when the application of the terminal device 20 is started or operated.

First, the information acquisition unit 11 acquires the explanatory variables used for prediction (step S300). For example, when the explanatory variable 1 is the airflow rate and the explanatory variable 2 is the outside air temperature, the information acquisition unit 11 acquires the airflow rate set value of the air conditioner 1 (indoor unit 5), and acquires the current outside air temperature from the outside air temperature sensor 2. In addition, the information acquisition unit 11 may acquire the current set temperature (when the power is OFF, the set temperature during the previous operation) at the same time.

Next, the prediction unit 16 reads out the thermal response parameters corresponding to the acquired explanatory variables (step S301). For example, when the current operation mode (when the power is OFF, the operation mode during the previous operation) is the heating operation, the prediction unit 16 reads out the parameters (tau_avg, lag_avg) corresponding to the explanatory variables from the time constant table LUT3 for the heating operation and the dead time table LUT4 for the heating operation. A method of determining the index of the storage destination cell of each parameter is the same as the method in step S201 of FIG. 6.

In addition, the prediction unit 16 predicts the predicted arrival time D for the indoor temperature of the air-conditioning target space to reach the target temperature based on the read-out thermal response parameters (step S302). The predicted arrival time D is calculated by, for example, the following expression (3). The target temperature is represented by, for example, x% (any value such as 90% and 95%) of the current set temperature. In addition, a coefficient C of the time constant $\tau$ (tau_avg) is a value of 1 or more, and can be changed in accordance with the target temperature. For example, when the target temperature is 95% of the set temperature, C = 3, and when the target temperature is 90% of the set temperature, C = 2.3.

$$D = C \times tau\_avg + lag\_avg \ ... \ (3)$$

Next, the communication unit 18 transmits the predicted arrival time D predicted by the prediction unit 16 to the terminal device 20 (step S303).

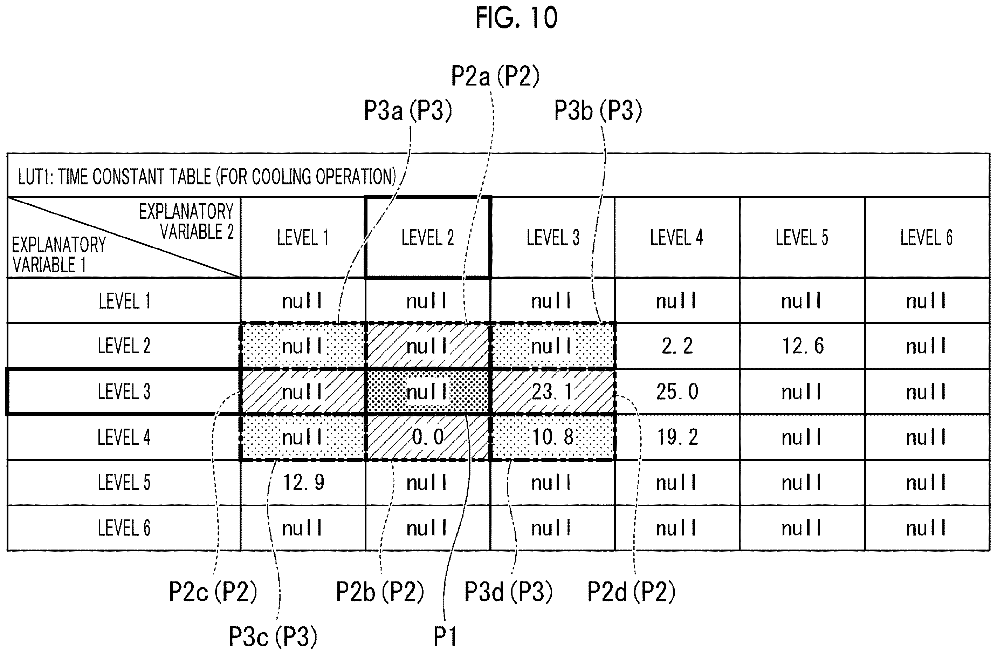

FIG. 10 is a diagram showing a display example of the terminal device according to the first embodiment.

For example, as shown in FIG. 10, an application screen of the terminal device 20 displays information such as current information C201 and prediction information C202, and an operation reception portion C203 that receives the remote operation of the air conditioner 1 performed by the user is displayed. The current information C201 includes information such as the current date and time, the indoor temperature, the outside air temperature, and the set temperature. The prediction information C202 includes the predicted arrival time D received from the control device 10 of the air conditioner 1. Further, the prediction information C202 may include a prediction time obtained by adding the predicted arrival time D to the current time. In addition, the operation reception portion C203 may include an "immediate ON/OFF button", a "timer setting ON/OFF button", a "timer date and time setting button", and the like.

The user remotely operates the air conditioner 1 via the operation reception portion C203 while referring to the current time and the predicted arrival time D to the set temperature. For example, in the example of FIG. 10, it is assumed that the predicted arrival time D to the set temperature is about 13 minutes, and the user plans to occupy the air-conditioning target space in about 15 minutes. In this case, the user turns on the power of the air conditioner 1 by operating the "immediate ON/OFF button". Then, the control unit 17 of the control device 10 acquires the operation instruction (power ON) from the terminal device 20 through the communication unit 18 (step S304), and performs the control of turning on the power of the air conditioner 1 (indoor unit 5) (step S305).

In addition, for example, in a case where there is time before the user occupies the air-conditioning target space, the user may operate the "timer setting ON/OFF" button of the operation reception portion C203 of the terminal device 20 to set the timer to ON. In addition, the timer date and time setting may be operated to set the indoor temperature to the set temperature at any set time. Then, the control unit 17 of the control device 10 acquires the operation instruction (timer setting ON and the set time) from the terminal device 20 through the communication unit 18 (step S304), and automatically starts the air conditioning at a time that is the predicted arrival time D before the set time or a little before the time such that the set temperature is achieved at the set time set for the user in the air-conditioning target space, and then performs the cooling operation or the heating operation such that the set temperature can be achieved by the set time (step S305).

Further, the user may change the current set temperature. For example, the set temperature may be changed by tapping a set temperature portion of the current information C201. Then, the control device 10 acquires the operation instruction (instruction to change the set temperature) from the terminal device 20 through the communication unit 18. In this case, the control device 10 may return to step S302 and re-execute the prediction of the predicted arrival time.

(Operations and Effects)

As described above, a control device 10 according to the present embodiment includes an extraction unit 12 that extracts an element included in a monitoring interval from a predetermined start condition to a predetermined end condition of air conditioning control by an air conditioner from time-series data obtained by measuring an indoor temperature of an air-conditioning target space, an estimation unit 14 that estimates a time constant estimation value $\tau$ and a dead time estimation value L of a first-order delay response of the air conditioning control based on the time-series data of the monitoring interval, and a learning unit 15 that learns a lookup table LUT in which an explanatory variable that is a condition affecting air conditioning of the air-conditioning target space is associated with the dead time estimation value L and the time constant estimation value $\tau$.

With this configuration, the control device 10 can learn the lookup table that serves as a substitute for the prediction model with a simpler and lighter algorithm than the algorithm for training the prediction model by using a statistical method, machine learning, or the like. That is, the control device 10 can learn the lookup table LUT that can predict the thermal response parameters for the set temperature with low load and at high speed even when only limited computational resources are installed.

The learning unit 15 determines a storage destination cell corresponding to the explanatory variable from the lookup table LUT, and updates the dead time estimation value and the time constant estimation value in the lookup table LUT by calculating a weighted average of a new estimation value obtained by the estimation unit 14 and a past estimation value recorded in the storage destination cell.

With this configuration, the control device 10 can update the lookup table LUT so as to reflect the new estimation value and gradually forget the past estimation value. As a result, for example, the influence of the thermal response parameter due to aging deterioration or the like can be reflected in the lookup table LUT.

The control device 10 further includes a prediction unit 16 that predicts a predicted arrival time D for the air-conditioning target space to reach a target temperature based on the lookup table LUT and a current explanatory variable.

With this configuration, the control device 10 can accurately predict the predicted arrival time D for the air-conditioning target space to reach the target temperature by using the thermal response parameters in the lookup table LUT.

<Second Embodiment>

Next, a second embodiment will be described with reference to FIG. 10. The same components as those in the above embodiment are denoted by the same reference numerals, and detailed description thereof will be omitted.

In the first embodiment, the learning unit 15 identifies only one storage destination cell, and reflects and updates the new thermal response parameter estimation values (tau_est, lag_est). In the present embodiment, the learning unit 15 reflects and updates the new thermal response parameter estimation values in the storage destination cell and the cell around the storage destination cell.

FIG. 10 is a diagram showing an example of the process of updating the lookup table according to the first embodiment.

Here, an example will be described in which the time constant table LUT1 for the cooling operation is updated. For example, as shown in FIG. 10, the learning unit 15 determines a cell P1 as the storage destination cell of the new time constant estimation value tau_est (step S201 of FIG. 5). In the present embodiment, in step S201, the learning unit 15 determines at least one cell around the storage destination cell P1 as the target cell in which the new time constant estimation value tau_est is reflected. The surrounding target cell is, for example, a cell P2 adjacent to the storage destination cell P1 on the top, bottom, left and right. In addition, the surrounding target cell may further include a cell P3 diagonally adjacent to the storage destination cell P1.

Then, as in the first embodiment, the learning unit 15 inputs a weighted average value of the new time constant estimation value tau_est and the past time constant estimation value tau_avg_old to the storage destination cell P1 (step S203 of FIG. 5). Furthermore, the learning unit 15 according to the present embodiment reflects the new time constant estimation value tau_est in the target cells P2 and P3 around the storage destination cell P1 in addition to the storage destination cell P1.

Specifically, when the average value tau_avg_old of the past time constant estimation value is not recorded (is null) in the target cells P2 and P3, the learning unit 15 directly assigns the new time constant estimation value tau_est into the target cells P2 and P3. On the other hand, when the average value tau_avg_old of the past time constant estimation value is recorded (is not null) in the target cells P2 and P3, the learning unit 15 calculates the new time constant average value tau_avg_new by using the expression (1) (step S202 of FIG. 5). In this case, the learning unit 15 calculates the average value with a smaller weight $\alpha$ for the target cells P2 and P3 than for the storage destination cell P1. Further, the learning unit 15 inputs the calculated new time constant average value tau_avg_new to the target cells P2 and P3 to update the table (step S203 of FIG. 5).

In the example of FIG. 10, since the cells P2a, P2c, P3a, P3b, and P3c among the target cells P2 and P3 are null, the learning unit 15 directly assigns the new time constant estimation value tau_est into these cells. In addition, since the cells P2b and P3d are not null, the weighted average value of the new time constant estimation value tau_est and the average value tau_avg_old of the past time constant estimation value is assigned into the cells P2b and P3d as the new time constant average value tau_avg_new by using the expression (1). The value of the weight $\alpha$ may be changed for each target cell P2 and P3 such that the value of the weight $\alpha$ decreases as a distance between the storage destination cell P1 and the target cell increases. In the example of FIG. 10, the value of the weight $\alpha$ of the target cell P2 may be greater than the value of the weight $\alpha$ of the target cell P3.

The learning unit 15 performs the same process on the dead time estimation value.

(Operations and Effects)

As described above, in the control device 10 according to the second embodiment, the learning unit 15 determines at least one target cell P2 or P3 around the storage destination cell P1, and updates the dead time estimation value and the time constant estimation value in the lookup table LUT by calculating a weighted average of the new estimation value obtained by the estimation unit 14 and a past estimation value recorded in the target cell P2 or P3.

For example, there may be a bias between cells with a large number of samples and cells with a small number of samples (or no samples at all) depending on the operation mode (cooling operation or heating operation). On the other hand, since the level categories of the explanatory variables are close to each other in the adjacent cells, it is considered that the estimation values of the thermal response parameters are also close to each other. Therefore, as described above, the learning unit 15 according to the present embodiment can compensate for the shortage of the number of samples by reflecting the new estimation values of thermal response parameters in the target cells P2 and P3 around the storage destination cell P1 identified by the explanatory variable. Further, for example, in the initial stage of learning, the content of the lookup table LUT can be quickly enriched with a small number of samples. As a result, it is possible to reduce the possibility that the prediction of the predicted arrival time D is difficult due to the absence of the sample (being null).

<Another Embodiment>

The embodiments have been described in detail above with reference to the drawings, but the specific configuration is not limited to the above description, and various design changes and the like can be made. That is, in another embodiment, the order of the above processes may be changed as appropriate. Further some of the processes may be executed in parallel.

For example, in the above embodiments, the example has been described in which the control device 10 (learning unit 15) of the air conditioner 1 trains the prediction model (lookup table LUT), but the present disclosure is not limited to this. In another embodiment, the thermal response parameters estimated by the control devices 10 (estimation unit 14) of a plurality of air conditioners 1 may be transmitted to a server to be aggregated, and the server may train the prediction model. In this case, the server performs statistical processing, machine learning, or the like using a large number of thermal response parameters to generate and update the prediction model. In addition, the server periodically predicts the thermal response parameters (time constant $\tau$ and dead time L) for each air conditioner 1 by the prediction model, and transmits the prediction results to each air conditioner 1. The control device 10 (learning unit 15) of the air conditioner 1 overwrites the lookup table LUT of the memory 4 with the thermal response parameters received from the server. In still another embodiment, the application of the terminal device 20 may acquire the thermal response parameters from the control device 10, and train the prediction model. The application of the terminal device 20 periodically predicts the thermal response parameters (time constant $\tau$ and dead time L) of the air conditioner 1 by the prediction model, and transmits the prediction results to the air conditioner 1. The control device 10 (learning unit 15) of the air conditioner 1 overwrites the lookup table LUT of the memory 4 with the thermal response parameters received from the terminal device 20. With this configuration, the process load of the learning unit 15 can be reduced.

In addition, in the above embodiment, the example has been described in which the control device 10 (prediction unit 16) of the air conditioner 1 determines the storage destination cell corresponding to the explanatory variable from the lookup table LUT and predicts the predicted arrival time D based on the thermal response parameters read out from the storage destination cell, but the present disclosure is not limited to this. In another embodiment, the prediction unit 16 may predict the predicted arrival time D by using, for example, an average value of the estimation values of the thermal response parameters of the cells around the storage destination cell when the estimation values of the thermal response parameters are not recorded (are null) in the storage destination cell. For example, as in the example of FIG. 10, when the storage destination cell P1 is null, the prediction unit 16 predicts the predicted arrival time D by using the average value of the estimation values read out from the target cells P2 and P3 around the storage destination cell P1. With this configuration, for example, even when there are many null cells in the lookup table LUT in the initial stage of learning or the like, it is possible to perform the prediction using the estimation values of the target cells P2 and P3 around the storage destination cell P1.

<Supplementary Note>

The control device, the control method, and the program according to the above embodiments are understood as follows, for example.

(1) A first aspect relates to a control device 10 including: an extraction unit that extracts an element included in a monitoring interval from a predetermined start condition to a predetermined end condition of air conditioning control by an air conditioner from time-series data obtained by measuring an indoor temperature of an air-conditioning target space; an estimation unit that estimates a time constant estimation value and a dead time estimation value of a first-order delay response of the air conditioning control based on the time-series data of the monitoring interval; and a learning unit that learns a lookup table in which an explanatory variable that is a condition affecting air conditioning of the air-conditioning target space is associated with the dead time estimation value and the time constant estimation value.

With this configuration, the control device 10 can learn the lookup table that serves as a substitute for the prediction model with a simpler and lighter algorithm than the algorithm for training the prediction model by using a statistical method, machine learning, or the like. That is, the control device 10 can learn the lookup table LUT that can predict the thermal response parameters for the set temperature with low load and at high speed even when only limited computational resources are installed.

(2) A second aspect relates to the control device 10 according to the first aspect, in which the learning unit determines a storage destination cell corresponding to the explanatory variable from the lookup table, and updates the dead time estimation value and the time constant estimation value in the lookup table by calculating a weighted average of a new estimation value obtained by the estimation unit and a past estimation value recorded in the storage destination cell.

With this configuration, the control device 10 can update the lookup table LUT so as to reflect the new estimation value and gradually forget the past estimation value. As a result, for example, the influence of the thermal response parameter due to aging deterioration or the like can be reflected in the lookup table LUT.

(3) A third aspect relates to the control device 10 according to the first or second aspect, in which the learning unit determines at least one target cell around the storage destination cell, and updates the dead time estimation value and the time constant estimation value in the lookup table by calculating a weighted average of the new estimation value obtained by the estimation unit and a past estimation value recorded in the target cell.

For example, there may be a bias between cells with a large number of samples and cells with a small number of samples (or no samples at all) depending on the operation mode (cooling operation or heating operation). On the other hand, since the level categories of the explanatory variables are close to each other in the adjacent cells, it is considered that the estimation values of the thermal response parameters are also close to each other. Therefore, as described above, the learning unit 15 according to the present embodiment can compensate for the shortage of the number of samples by reflecting the new estimation values of thermal response parameters in the target cells P2 and P3 around the storage destination cell P1 identified by the explanatory variable. Further, for example, in the initial stage of learning, the content of the lookup table LUT can be quickly enriched with a small number of samples.

(4) A fourth aspect relates to the control device 10 according to any one of the first to third aspects, further including: a prediction unit that predicts a predicted arrival time for the air-conditioning target space to reach a target temperature based on the lookup table and a current explanatory variable.

With this configuration, the control device 10 can accurately predict the predicted arrival time D for the air-conditioning target space to reach the target temperature by using the thermal response parameters in the lookup table LUT.

(5) A fifth aspect relates to a control method including: a step of extracting an element included in a monitoring interval from a predetermined start condition to a predetermined end condition of air conditioning control by an air conditioner from time-series data obtained by measuring an indoor temperature of an air-conditioning target space; a step of estimating a time constant estimation value and a dead time estimation value of a first-order delay response of the air conditioning control based on the time-series data of the monitoring interval; and a step of learning a lookup table in which an explanatory variable that is a condition affecting air conditioning of the air-conditioning target space is associated with the dead time estimation value and the time constant estimation value.

(6) A sixth aspect relates to a program causing a control device to execute a process including: a step of extracting an element included in a monitoring interval from a predetermined start condition to a predetermined end condition of air conditioning control by an air conditioner from time-series data obtained by measuring an indoor temperature of an air-conditioning target space; a step of estimating a time constant estimation value and a dead time estimation value of a first-order delay response of the air conditioning control based on the time-series data of the monitoring interval; and a step of learning a lookup table in which an explanatory variable that is a condition affecting air conditioning of the air-conditioning target space is associated with the dead time estimation value and the time constant estimation value.

Industrial Applicability

According to the above aspects, even when only limited computational resources are installed, it is possible to learn the lookup table that can predict the thermal response parameters for the set temperature with low load and at high speed.

**EP 4 741 726 A1**

Reference Signs List

1: air conditioner
2: outside air temperature sensor
3: indoor temperature sensor
4: memory
5: indoor unit
6: outdoor unit
10: control device
11: information acquisition unit
12: extraction unit
14: estimation unit
15: learning unit
16: prediction unit
17: control unit
18: communication unit
20: terminal device
100: air conditioning system
LUT: lookup table

**Claims**

1. A control device comprising:

    an extraction unit that extracts an element included in a monitoring interval from a predetermined start condition to a predetermined end condition of air conditioning control by an air conditioner from time-series data obtained by measuring an indoor temperature of an air-conditioning target space;
    an estimation unit that estimates a time constant estimation value and a dead time estimation value of a first-order delay response of the air conditioning control based on the time-series data of the monitoring interval; and
    a learning unit that learns a lookup table in which an explanatory variable that is a condition affecting air conditioning of the air-conditioning target space is associated with the dead time estimation value and the time constant estimation value.

2. The control device according to Claim 1,
   wherein the learning unit

    determines a storage destination cell corresponding to the explanatory variable from the lookup table, and
    updates the dead time estimation value and the time constant estimation value in the lookup table by calculating a weighted average of a new estimation value obtained by the estimation unit and a past estimation value recorded in the storage destination cell.

3. The control device according to Claim 2,
   wherein the learning unit

    determines at least one target cell around the storage destination cell, and
    updates the dead time estimation value and the time constant estimation value in the lookup table by calculating a weighted average of the new estimation value obtained by the estimation unit and a past estimation value recorded in the target cell.

4. The control device according to any one of Claims 1 to 3, further comprising:
   a prediction unit that predicts a predicted arrival time for the air-conditioning target space to reach a target temperature based on the lookup table and a current explanatory variable.

5. A control method comprising:

a step of extracting an element included in a monitoring interval from a predetermined start condition to a predetermined end condition of air conditioning control by an air conditioner from time-series data obtained by measuring an indoor temperature of an air-conditioning target space;

a step of estimating a time constant estimation value and a dead time estimation value of a first-order delay response of the air conditioning control based on the time-series data of the monitoring interval; and

a step of learning a lookup table in which an explanatory variable that is a condition affecting air conditioning of the air-conditioning target space is associated with the dead time estimation value and the time constant estimation value.

6. A program causing a control device to execute a process comprising:

a step of extracting an element included in a monitoring interval from a predetermined start condition to a predetermined end condition of air conditioning control by an air conditioner from time-series data obtained by measuring an indoor temperature of an air-conditioning target space;

a step of estimating a time constant estimation value and a dead time estimation value of a first-order delay response of the air conditioning control based on the time-series data of the monitoring interval; and

a step of learning a lookup table in which an explanatory variable that is a condition affecting air conditioning of the air-conditioning target space is associated with the dead time estimation value and the time constant estimation value.

FIG. 1

# FIG. 2

LUT

| LUT4: DEAD TIME TABLE (FOR HEATING OPERATION) |
| LUT3: TIME CONSTANT TABLE (FOR HEATING OPERATION) |
| LUT2: DEAD TIME TABLE (FOR COOLING OPERATION) |

**LUT1: TIME CONSTANT TABLE (FOR COOLING OPERATION)**

| EXPLANATORY VARIABLE 1 \ EXPLANATORY VARIABLE 2 | LEVEL 1 | LEVEL 2 | LEVEL 3 | ... |
|---|---|---|---|---|
| LEVEL 1 | $\tau$ AVERAGE VALUE (tau_avg) NUMBER OF SAMPLES (n) | ... | ... | ... |
| LEVEL 2 | ... | ... | ... | ... |
| LEVEL 3 | ... | ... | ... | ... |
| ⋮ | ... | ... | ... | ... |

# FIG. 3

| EXPLANATORY VARIABLE | SET VALUE | | LEVEL CATEGORIES |
|---|---|---|---|
| AIRFLOW RATE | Low | | 1 |
| | Middle | | 2 |
| | High | | 3 |
| | ⋮ | | ⋮ |
| OUTSIDE AIR TEMPERATURE | MEASURED VALUE (WHEN COOLING) | MEASURED VALUE (WHEN HEATING) | LEVEL CATEGORIES |
| | LOWER THAN 20°C | LOWER THAN 0°C | 1 |
| | 20°C OR HIGHER AND LOWER THAN 25°C | 0°C OR HIGHER AND LOWER THAN 5°C | 2 |
| | 25°C OR HIGHER AND LOWER THAN 30°C | 5°C OR HIGHER AND LOWER THAN 10°C | 3 |
| | ⋮ | ⋮ | ⋮ |

EP 4 741 726 A1

## FIG. 4

START

S100
IS START CONDITION SATISFIED? — NO

YES

START HOLDING OF NECESSARY INFORMATION — S101

S102
IS END CONDITION SATISFIED? — NO

YES

S103
VALID INTERVAL? — NO

YES

EXECUTE ESTIMATION OF PARAMETERS — S105

STORE PARAMETER ESTIMATION RESULTS — S106

CLEAR BUFFER — S107

END

# FIG. 5

```
        ┌─────────┐
        │  START  │
        └─────────┘
             │
             ▼
┌─────────────────────────┐
│  READ OUT NEW ESTIMATION │
│  VALUE AND EXPLANATORY   │～S200
│       VARIABLE           │
└─────────────────────────┘
             │
             ▼
┌─────────────────────────┐
│ DETERMINE INDEX OF STORAGE│～S201
│    DESTINATION CELL      │
└─────────────────────────┘
             │
             ▼
┌─────────────────────────┐
│  CALCULATE AVERAGE VALUE │～S202
└─────────────────────────┘
             │
             ▼
┌─────────────────────────┐
│   UPDATE LOOKUP TABLE    │～S203
└─────────────────────────┘
             │
             ▼
        ┌─────────┐
        │   END   │
        └─────────┘
```

# FIG. 6

# FIG. 7

START

↓

ACQUIRE EXPLANATORY
VARIABLE — S300

↓

READ OUT THERMAL
RESPONSE PARAMETERS — S301

↓

PREDICT PREDICATED
ARRIVAL TIME — S302

↓

TRANSMIT PREDICATED ARRIVAL
TIME TO TERMINAL DEVICE — S303

↓

ACQUIRE OPERATION
INSTRUCTION — S304

↓

CONTROL AIR CONDITIONER
IN ACCORDANCE WITH
OPERATION INSTRUCTION — S305

↓

END

# FIG. 8

## FIG. 9

20

REMOTE OPERATION APPLICATION
MAY 18 16:04

CURRENT ROOM
TEMPERATURE: 29°C
CURRENT OUTSIDE
AIR TEMPERATURE: 31° C ← C201

SET TEMPERATURE:

| 24 | °C |

TO SET TEMPERATURE

ABOUT **13** MINUTES ← C202
(16:17)

IMMEDIATE ON/OFF  ( ) OFF

TIMER SETTING  ON ( ) ← C203

TIMER DATE
AND TIME SETTING

## FIG. 10

P2a (P2)

P3a (P3)        P3b (P3)

| LUT1: TIME CONSTANT TABLE (FOR COOLING OPERATION) | | | | | | |
|---|---|---|---|---|---|---|
| EXPLANATORY VARIABLE 1 \ EXPLANATORY VARIABLE 2 | LEVEL 1 | LEVEL 2 | LEVEL 3 | LEVEL 4 | LEVEL 5 | LEVEL 6 |
| LEVEL 1 | null | null | null | null | null | null |
| LEVEL 2 | null | null | null | 2.2 | 12.6 | null |
| LEVEL 3 | null | null | 23.1 | 25.0 | null | null |
| LEVEL 4 | null | 0.0 | 10.8 | 19.2 | null | null |
| LEVEL 5 | 12.9 | null | null | null | null | null |
| LEVEL 6 | null | null | null | null | null | null |

P2c (P2)        P2b (P2)    P3d (P3)    P2d (P2)

P3c (P3)        P1

EP 4 741 726 A1

## INTERNATIONAL SEARCH REPORT

| International application No. |
|---|
| **PCT/JP2024/030035** |

**A. CLASSIFICATION OF SUBJECT MATTER**

*F24F 11/64*(2018.01)i; *G05B 13/02*(2006.01)i; *F24F 110/10*(2018.01)n
FI:   F24F11/64: G05B13/02 L; F24F110:10

According to International Patent Classification (IPC) or to both national classification and IPC

**B. FIELDS SEARCHED**

Minimum documentation searched (classification system followed by classification symbols)

F24F11/64; G05B13/02; F24F110/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 07-332732 A (DAIKIN INDUSTRIES, LTD.) 22 December 1995 (1995-12-22) paragraphs [0005]-[0024], fig. 1-3 | 1, 4-6 |
| A | | 2-3 |
| Y | JP 2001-227795 A (DAIKIN INDUSTRIES, LTD.) 24 August 2001 (2001-08-24) paragraphs [0033]-[0034] | 1, 4-6 |
| A | | 2-3 |
| Y | JP 07-253236 A (KABUSHIKI KAISHA TOSHIBA) 03 October 1995 (1995-10-03) paragraphs [0023]-[0049] | 1, 4-6 |
| A | | 2-3 |
| Y | WO 2022/185399 A1 (MITSUBISHI ELECTRIC CORPORATION) 09 September 2022 (2022-09-09) paragraph [0058] | 4 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 October 2024** | **22 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/030035** |

| Patent document cited in search report | | | Publication date (day/month/year) | Patent family member(s) | Publication date (day/month/year) |
| --- | --- | --- | --- | --- | --- |
| JP | 07-332732 | A | 22 December 1995 | (Family: none) | |
| JP | 2001-227795 | A | 24 August 2001 | (Family: none) | |
| JP | 07-253236 | A | 03 October 1995 | (Family: none) | |
| WO | 2022/185399 | A1 | 09 September 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023142859 A
- JP 2001350503 A
- JP 2002054837 A